# EUROPÄISCHE PATENTSCHRIFT

(11) **EP 2 914 860 B1**
(45) Veröffentlichungstag und Bekanntmachung des Hinweises auf die Patenterteilung: **17.05.2017**
(21) Anmeldenummer: 14701056.5
(22) Anmeldetag: 21.01.2014
(51) Int. Cl.: F04D 29/12, F16J 15/40

(54) **AGGREGAT ZUR UMWÄLZUNG EINES SPERRFLUIDS**
ASSEMBLY FOR CIRCULATING A SEALING FLUID
UNITÉ SERVANT À FAIRE CIRCULER UN FLUIDE DE BARRAGE

(43) Veröffentlichungstag der Anmeldung: 09.09.2015
(73) Patentinhaber: DEPAC Anstalt (Establishment), 9492 Eschen (LI)
(72) Erfinder: SCRIVENER, Peter, 9494 Schaan (LI); DOLISCHKA, Thomas, 6840 Götzis (AT); HAGEN, Christian, 6834 Übersaxen (AT)
(74) Vertreter: Winter, Brandl, Fürniss, Hübner, Röss, Kaiser, Polte - Partnerschaft mbB
(86) Internationale Anmeldenummer: PCT/EP2014/051119
(87) Internationale Veröffentlichungsnummer: WO 2015/110144

(56) Entgegenhaltungen:
- WO-A1-2008/138730
- DE-C- 471 012
- US-A- 5 636 847

## Beschreibung

Die Erfindung geht aus von einem Aggregat zur Umwälzung eines Sperrfluids in einem Sperrfluidraum einer doppelt wirkenden Gleitringdichtungsanordnung. Des Weiteren betrifft die Erfindung eine Anordnung mit einer doppelt wirkenden Gleitrichtungsanordnung und einem Aggregat zur Umwälzung.

Aus der DE 299 17 172 U1 ist eine einfach wirkende Gleitringdichtung beziehungsweise Gleitringdichtungsanordnung offenbart. Eine derartige Gleitringdichtungsanordnung dient beispielsweise zum Abdichten von Triebwellen, die in unterschiedlichen Vorrichtungen (Pumpen, Mischer) vorgesehen sein können. Eine Abdichtung erfolgt üblicherweise zwischen einem Arbeitsraum der Vorrichtung und einer Umgebung (Atmosphäre). Eine einfach wirkende Gleitringdichtungsanordnung, wie sie in dem genannten Dokument offenbart ist, weist ein Gleitringpaar auf, welches eine primäre Dichtungsfunktion erfüllt. Einer der Gleitringe des Gleitringpaars ist mit der drehbaren Triebwelle verbunden, womit es sich bei diesem um einen dynamischen Gleitring handelt. Der andere Gleitring ist gehäusefest und somit ein stationärer Gleitring. Die Gleitringe liegen über Gleitflächen aneinander an, wobei zwischen den Gleitflächen ein Schmierfilm vorgesehen ist. Neben dem Gleitringpaar sind üblicherweise weitere sekundäre Dichtelemente vorgesehen, die beispielsweise aus Elastomermaterialien bestehen.

Kann durch die einfach wirkende Gleitringdichtung keine dauerhafte Dichtigkeit erzielt werden oder ist es aus sicherheitstechnischen Gründen notwendig, eine zusätzliche Barriere zwischen dem Arbeitsraum der Vorrichtung und der Umgebung zu schaffen, so können doppelt wirkende Gleitringdichtungen eingesetzt werden. Eine derartige Gleitringdichtung ist in der DE 298 18 576 U1 offenbart. Diese weist zwei Gleitringpaare auf. Diese sind in Längsrichtung der Triebwelle gesehen hintereinander angeordnet und begrenzen zusammen einen Sperrfluidraum mit einem Sperrfluid. Eines der Gleitringpaare dient dabei zur Abdichtung des Arbeitsraumes gegenüber dem Sperrfluidraum und das andere Gleitringpaar zur Abdichtung des Sperrfluidraums gegenüber der Umgebung. Bei dem Sperrfluid handelt es sich üblicherweise um ein reines (sauberes), schmierfähiges Medium, wie beispielsweise Wasser oder Öl, das eine geringe Viskosität aufweist. Um die Gleitflächen des arbeitsraumseitigen Gleitringpaares zur Schmierung mit dem Sperrfluid zu versorgen, wird der Sperrfluidraum mit einem Systemdruck beaufschlagt, der größer als ein Druck im abzudichtenden Arbeitsraum ist.

Im Einsatz der Vorrichtung bei drehender Triebwelle bildet sich durch eine Relativbewegung der Gleitringe eines jeweiligen Gleitringpaars zueinander an den Gleitflächen Reibungswärme. Diese wird bei dem arbeitsraumseitigen Gleitringpaar über ein Arbeitsmittel im Arbeitsraum und/oder über das Sperrfluid abgeführt. Bei dem umgebungsseitigen Gleitringpaar wird die Reibungswärme größtenteils durch das Sperrfluid abgeführt. Zum Abführen der Reibungswärme vom Sperrfluid wird dieses umgewälzt bzw. zirkuliert. Mangelt es an einer ausreichenden Zirkulation des Sperrfluids, so kann die Reibungswärme nicht ausreichend abgeführt werden. Dies wiederum kann zur Folge haben, dass sich die Gleitringe derart stark erhitzen, dass der zwischen diesen vorgesehene Schmierfilm verdampft. Eine ausreichende Schmierung der Gleitflächen ist in diesem Zustand nicht mehr möglich, womit diese in direkten Kontakt treten können. Die hierdurch entstehenden hohen Temperaturen können wiederum die Sekundärdichtungen zerstören. Eine ausreichende Dichtung des Arbeitsraums ist dann nicht mehr möglich.

Zur Umwälzung und Druckbeaufschlagung des Sperrfluids sind aus dem Stand der Technik Aggregate bekannt. Zur Förderung des Sperrfluids ist eine Hydropumpe vorgesehen, wobei eine Fluidmenge und der Systemdruck über Ventile steuerbar sind. Die Ventile sind üblicherweise über eine Steuereinheit gesteuert. Zur Steuerung erfasst die Steuereinheit elektronisch über Sensoren Zustandswerte der hydraulischen Anordnung. Derartige Aggregate sind nachteilig vorrichtungstechnisch äußerst komplex ausgestaltet.

Des Weiteren sind aus dem Stand der Technik zur Umwälzung passive Systeme bekannt, die als Thermosiphon-Systeme bezeichnet werden. Ein derartiges System ist beispielsweise aus der DE 1 961 835 U bekannt. Hierbei ist ein Druckbehälter vorgesehen, der einen definierten Systemdruck aufrechterhält.

In der WO 2008/138730 A1 ist eine weitere Ausführungsform eines Aggregats offenbart.

Demgegenüber liegt der Erfindung die Aufgabe zugrunde, ein Aggregat und ein Aggregat zu schaffen, mit denen auf vorrichtungstechnisch einfache Weise eine Umwälzung eines Sperrfluids erfolgt und ein eingestellter Systemdruck in einem Sperrfluidraum aufrechterhalten wird.

Die Aufgabe hinsichtlich des Aggregats wird gelöst gemäß den Merkmalen des Anspruchs 1 und hinsichtlich der Anordnung gemäß den Merkmalen des Anspruchs 15.

Sonstige vorteilhafte Weiterbildungen der Erfindung sind Gegenstand weiterer Unteransprüche.

Erfindungsgemäß ist ein Aggregat bzw. Versorgungssystem zur Umwälzung eines Druckmittels (insbesondere eines Sperrfluids) in einem Druckmittelraum (insbesondere in einem Sperrfluidraum) vorgesehen. Das Aggregat dient somit zur Zufuhr des Druckmittels in den Druckmittelraum und zur Abfuhr des Druckmittels aus dem Druckmittelraum. Es hat einen Ausgangs- und einen Eingangsanschluss, die fluidisch mit dem Druckmittelraum verbindbar sind. Des Weiteren ist ein Tankanschluss vorgesehen, der mit einem Tank verbindbar ist. Eine erste Hydropumpe dient zur Zwangsumwälzung des Druckmittels. Diese ist eingangsseitig mit dem Eingangsanschluss und ausgangsseitig mit dem Ausgangsanschluss verbunden und fördert Druckmittel vom Eingangsanschluss zum Ausgangsanschluss. Zum Druckaufbau eines Systemdrucks und zur Unterstützung der Umwälzung ist eine zweite Hydropumpe vorgesehen. Diese kann eingangsseitig mit dem Tankanschluss und ausgangsseitig mit dem Ausgangsanschluss verbunden sein, womit beide Hydropumpen am Ausgangsanschluss angeschlossen sind und somit ausgangsseitig miteinander verbunden sind. Damit Druckmittel von einem Tank zur zweiten Hydropumpe strömen kann, aber nicht umgekehrt, ist eine Einrichtung vorgesehen. Diese ermöglicht ein Strömen von Druckmittel vom Tankanschluss zur Eingangsseite der zweiten Hydropumpe und verhindert ein Strömen des Druckmittels in entgegengesetzter Richtung. Des Weiteren hat das Aggregat einen vorspannbaren Hydrospeicher, der ebenfalls fluidisch mit dem Ausgangsanschluss verbunden ist. Zur Regelung des Druckaufbaus und einer Menge des umzuwälzenden Druckmittels ist ein Regelventil bei dem Aggregat vorgesehen. Dieses ist mechanisch mit dem Hydrospeicher derart verbunden, dass es in Abhängigkeit von einem Ladevolumen des Hydrospeichers bzw. von einer Menge eines in dem Hydrospeicher gespeicherten Druckmittels eine Druckmittelverbindung zwischen den Eingangsseiten der Hydropumpen regelt.

Diese Lösung hat den Vorteil, dass das Aggregat autark ohne eine elektrische Steuereinrichtung auf vorrichtungstechnisch einfache Weise einen Systemdruck aufrecht erhalten und eine bestimmte Menge von Druckmittel umwälzen kann. Das Aggregat kann bei einer Leckage einfach Druckmittel über den Tankanschluss aus einem Tank saugen. Des Weiteren ist vorteilhaft, dass das Ladevolumen des Hydrospeichers unmittelbar vom Systemdruck ausgangsseitig von den Hydropumpen abhängt. Durch die mechanische Wirkverbindung des Regelventils mit dem Hydrospeicher wird somit der Systemdruck über den Hydrospeicher auf das Regelventil mechanisch rückgekoppelt. Hierdurch kann das Regelventil systemdruckabhängig die Druckmittelverbindung zwischen den Eingangsseiten der Hydropumpe steuern. Verringert sich beispielsweise der Systemdruck, so kann das Regelventil die Druckmittelverbindung zusteuern (schließen), womit die zweite Hydropumpe Druckmittel über den Tankanschluss nachsaugt. Ist der Systemdruck erreicht, so kann das Regelventil die Druckmittelverbindung aufsteuern (öffnen), womit die zweite Hydropumpe zusätzlich zur ersten Hydropumpe zur Umwälzung des Druckmittels eingesetzt ist und beide fluidisch parallel betrieben sind (hierbei ist die unidirektionale Einrichtung im Strömungspfad zwischen dem Tank und der zweiten Hydropumpe geschlossen). Der Hydrospeicher hat des Weiteren den Vorteil, dass im Stillstand der Hydropumpen weiterhin eine Druckbeaufschlagung des Sperrfluids erfolgt. Somit ist die Druckbeaufschlagung auch bei einem Stillstand des Aggregats sichergestellt. Durch das erfindungsgemäße Aggregat wird somit das Speichern des Druckmittels, das Regeln des Systemdrucks und eine Wiederbefüllung des hydraulischen Systems im Falle einer Leckage selbsttätig vorgenommen. Da zwei Hydropumpen vorgesehen sind, ist eine Aufgabenteilung möglich nämlich dass die erste Hydropumpe für die Umwälzung zuständig ist und die zweite Hydropumpe als multifunktionale Pumpe den Systemdruck aufbaut, regelt, Druckmittel nachfüllen kann und zusätzlich zur Umwälzung einsetzbar ist. Da die erste Hydropumpe allein für die Umwälzung zuständig ist, kann unmittelbar nach Aktivierung des Aggregats die Umwälzung bzw. Zirkulation des Druckmittels sichergestellt werden. Durch die Doppelfunktion der zweiten Hydropumpe kann somit die Menge von umgewälztem Druckmittel bzw. die Zirkulationsmenge nach Erreichen des Systemdrucks durch Verwendung der zweiten Hydropumpe für die Umwälzung deutlich erhöht werden.

Bei dem Aggregat handelt es sich vorteilhafterweise um ein geschlossenes hydraulisches System, bei dem die Eingangsseiten der Hydropumpen mit einem Hochdruck beaufschlagbar sind.

In weiterer Ausgestaltung der Erfindung kann ein Ventilkörper des Regelventils mechanisch mit einem Trennelement des Hydrospeichers verbunden sein. Das Regelventil kann hierbei in Abhängigkeit einer Position des Trennelements die fluidischen Verbindungen zwischen den Eingangsseiten der Pumpen regeln, da die Position des Trennelements abhängig vom Ladevolumen des Hydrospeichers ist und somit abhängig vom Systemdruck.

Mit Vorteil ist der Hydrospeicher als ein Kolbenspeicher mit einem Kolben als Trennelement ausgebildet. Ein derartiger Kolben ist vorteilhaft, um den Hydrospeicher mit dem Ventilkörper des Regelventils zu koppeln. Der Kolben kann eine mit dem Ausgangsanschluss verbundenen Speicherraum von einem, beispielsweise mit Stickstoff gefüllten, Gasraum trennen. Zum Einstellen des Systemdrucks ausgangsseitig der Hydropumpen bzw. in dem Druckmittelraum, wird der Gasraum einfach mit Gas beschickt oder es wird Gas aus diesem entlassen. Der benötigte Systemdruck kann hierdurch auf einfache Weise stufenlos über den als Vorspanneinrichtung dienenden Hydrospeicher durch einen Benutzer eingestellt werden.

Bevorzugterweise steuert das Regelventil ab einem bestimmten Kolbenhub die fluidische Verbindung zwischen den Eingangsseiten der Hydropumpe auf. Des Weiteren kann das Regelventil die fluidische Verbindung ab einem bestimmten Kolbenhub, der kleiner oder gleich dem ersten Kolbenhub ist, zusteuern.

Mit Vorteil hat das Aggregat ein Gehäuse, das scheibenartig bzw. modulartig ausgestaltet ist. Hierdurch kann unterschiedlichen fluidischen Komponenten zumindest eine Scheibe zugeordnet werden. Ein derartig scheibenartig aufgebautes Gehäuse kann vorrichtungstechnisch einfach druckgekapselt werden, indem beispielsweise zumindest zwischen den Scheiben Dichtelemente, wie beispielsweise O-Dichtringe, angeordnet werden. Ferner zeichnet sich ein derartiges Gehäuse durch eine kompakte Ausgestaltung aus. Die fluidischen Komponenten, wie beispielsweise die Hydropumpen und das Regelventil, können über in den Scheiben ausgebildete Kanäle fluidisch miteinander verbunden sein.

Es ist weiter denkbar, das Aggregat derart auszugestalten, dass es von außen keine von einem Bediener beeinflussbaren oder veränderbaren Stellglieder hat, und der Bediener somit lediglich über den Druck im Gasraum das Aggregat einstellt. Das Aggregat ist somit vorzugsweise von außen nicht manipulierbar. Das Aggregat kann somit in einem kompakt ausgebildeten, druckgekapselten, modular aufgebauten Gehäuse ausgebildet sein, welches von außen keine Möglichkeit bietet, die Funktionsweise zu beeinträchtigen (außer dem Systemdruck).

Die Hydropumpen können als Außenzahnradpumpen ausgebildet sein. Diese zeichnen sich durch eine kompakte, robuste Bauweise aus, die einen vergleichsweise hohen Systemdruck bei einem vergleichsweise geringen Gewicht vorsehen können. Des Weiteren sind derartige Außenzahnradpumpen üblicherweise kostengünstig und weisen einen großen Temperatur- und Viskositätsbereich auf. Derartige Außenzahnradpumpen sind somit äußerst vorteilhaft für das kompakt ausgestaltete Aggregat. Die Außenzahnradpumpen können jeweils in einer jeweiligen Pumpenscheibe des Gehäuses angeordnet sein. Zur räumlichen Trennung der Pumpenscheiben kann eine Trennscheibe vorgesehen sein. Die Außenzahnradpumpen sind somit vorrichtungstechnisch einfach modulartig fest zueinander anordbar.

Die Außenzahnradpumpen können, insbesondere über eine gemeinsame Triebwelle (Antriebswelle), gemeinsam angetrieben werden. Hierzu ist jeweils ein Zahnrad der Außenzahnradpumpe mit der Triebwelle verbunden.

Die nicht mit der Triebwelle verbundenen Zahnräder der Außenzahnpumpen wiederum können auf einer gemeinsamen Lagerachse angeordnet sein. Sowohl die Triebwelle als auch die Lagerachse durchsetzen dann jeweils die Trennscheibe.

Der Hydrospeicher ist vorzugsweise an das Gehäuse des Aggregats angeflanscht. Das Gehäuse, insbesondere die Zwischenplatte, kann hierbei ein Verschlusselement bzw. eine Bodenseite des Hydrospeichers darstellen und zusammen mit den Kolben den Speicherraum begrenzen. Hierdurch kann kostengünstig ein zusätzliches Verschlusselement für den Hydrospeicher eingespart werden.

Vorrichtungstechnisch einfach kann an eine der Pumpenscheiben, insbesondere an der Pumpenscheibe mit der zweiten Hydropumpe, der Hydrospeicher auf der von dem Trennelement wegweisenden Scheibenseite angeordnet sein. Vorzugsweise ist der Hydrospeicher über eine Zwischenscheibe an die Pumpenscheibe angeordnet. Die Zahnräder der zweiten Außenzahnradpumpe können dann axial zwischen der Zwischenscheibe und der Trennscheibe gelagert sein.

Die Anschlüsse des Aggregats (der Eingangs-, der Ausgangs- und der Tankanschluss) sind vorrichtungstechnisch einfach an einer der Pumpenscheiben ausgebildet, insbesondere an der Pumpenscheibe für die erste Hydropumpe.

Die Lagerachse und die Triebwelle sind bevorzugterweise in Bohrungen gelagert, die zumindest die Pumpenscheiben und die Trennscheibe zumindest abschnittsweise durchsetzen.

Zahnräder, die mit der Triebwelle verbunden sind, können auf der Triebwelle angeordnet sein und axial und radial fest mit dieser verbunden sein. Da die Zahnräder axial zwischen den Scheiben gelagert sind, wird die Triebwelle ebenfalls axial über die Zahnräder im Gehäuse gelagert.

Als Einrichtung im Strömungspfad zwischen dem Tankanschluss und der Eingangsseite der zweiten Hydropumpe kann einfach ein unidirektionales Ventil vorgesehen sein, insbesondere ein sich in Druckmittelströmungsrichtung hin zur zweiten Hydropumpe öffnendes Rückschlagventil.

In weiterer Ausgestaltung der Erfindung sperrt ein Ventilkörper des Regelventils in einer Grundstellung die fluidische Verbindung zwischen den Eingangsseiten der Hydropumpen. In einer Schaltstellung kann er die fluidische Verbindung zwischen den Eingangsseiten freigeben. Somit handelt es sich bei dem Regelventil um ein einfach ausgestaltetes Wegeventil, was den vorrichtungstechnischen Aufwand des erfindungsgemäßen Aggregats weiter minimiert.

Der Ventilkörper ist vorzugsweise in einer oder mehreren der Scheiben und/oder im Kolben gelagert.

Mit Vorteil ist der Ventilkörper mit dem Kolben mechanisch verbunden.

Zur mechanischen Kopplung mit dem Hydrospeicher kann der Ventilkörper des Regelventils in Richtung seiner Grundstellung von einer Federkraft einer sich am Kolben abstützbaren (ersten) Ventilfeder beaufschlagt sein.

Bevorzugterweise ist der Ventilkörper entgegengesetzt zur Federkraft der ersten Ventilfeder in Richtung der Schaltstellung von einer Federkraft einer am Kolben abstützbaren zweiten Ventilfeder beaufschlagbar. Die Federkräfte sind hierbei abhängig vom Kolbenhub des Kolbens. Somit ist eine einfache mechanische Regelung ermöglicht, indem der Kolbenhub, der abhängig vom Systemdruck ist, auf den Ventilkörper über die Ventilfedern rückkoppelbar ist.

Es ist auch denkbar, dass der Ventilkörper in Richtung der Grundstellung oder der Schaltstellung über eine Ventilfeder mit dem Kolben gekoppelt ist und in der jeweils entgegengesetzten Richtung direkt vom Kolben bei einem bestimmten Kolbenhub mit einer Kraft beaufschlagt ist.

Mit Vorteil verringert sich die Federkraft der ersten Ventilfeder, wenn der Kolben in Richtung einer Vergrößerung des Ladevolumens verschoben wird. Die Verringerung kann bis zu einem bestimmten Hub erfolgen und im Anschluss daran konstant bleiben. In diese Richtung kann sich die Federkraft der zweiten Ventilfeder, insbesondere ab einem bestimmten Hub, vergrößern. Bei einer Verschiebung des Kolbens in entgegengesetzter Richtung kann sich die Federkraft der ersten Ventilfeder, insbesondere ab einem bestimmten Hub, erhöhen und sich die Federkraft der zweiten Ventilfeder, insbesondere bis zu einem bestimmten Hub, verringern.

Zum Koppeln mit dem Kolben weist der Ventilkörper des Regelventils vorzugsweise einen Stangenabschnitt auf. Dieser kann sich etwa parallel zur Längsachse des Kolbens erstrecken.

Der Stangenabschnitt kann in weiterer Ausgestaltung einen Radialbund aufweisen, der in eine hin zum Speicherraum geöffnete Aussparung (Sacklochaussparung) des Kolbens eingetaucht ist. Über den Radialbund ist der Ventilkörper vorrichtungstechnisch einfach mit den Federkräften beaufschlagbar.

Bevorzugter Weise ist das Regelventil als Sitzventil ausgebildet. Dem Ventilkörper ist hierbei ein Ventilsitz zugeordnet. Vorzugsweise ist der Ventilkörper bei einer Anlage auf den Ventilsitz nicht druckausgeglichen und beispielsweise mit einer aus einer Druckbeaufschlagung durch den Systemdruck resultierenden Kraft in Schließrichtung belastet. Durch den fehlenden Druckausgleich ist ein Dichtungsaufwand des Ventilkörpers im Gehäuse äußerst gering.

Zum Zusammenwirken mit dem Ventilsitz kann ein radial zum Stangenabschnitt verbreitertes Dichtelement ausgebildet sein, das beispielsweise eine etwa kegelstumpfförmige Außenmantelfläche aufweist.

Der Ventilsitz des Regelventils ist vorrichtungstechnisch einfach in einer der Pumpenscheiben, insbesondere in der Pumpenscheibe für die erste Hydropumpe oder alternativ für die zweite Hydropumpe, ausgebildet.

Der Ventilkörper erstreckt sich mit Vorteil ausgehend von seinem Ventilsitz durch eine oder mehrere Scheiben zum Kolben des Hydrospeichers. Der Ventilkörper kragt insbesondere aus einer den Speicherraum des Hydrospeichers begrenzenden Scheibe aus und ist an den Kolben gekoppelt.

Der Ventilkörper kann in weiterer Ausgestaltung dann ausgehend von der den Ventilsitz aufweisenden Pumpenscheibe mit seinem Stangenabschnitt die Trennscheibe, die andere Pumpenscheibe und die Zwischenscheibe durchsetzten und in die Aussparung des Kolbens des Hydrospeichers eintauchen. Der Ventilkörper kragt somit mit seinem Stangenabschnitt aus der Zwischenscheibe aus und taucht in den Kolben des Hydrospeichers ein. Eine Längsachse des Ventilkörpers und eine Längsachse des Kolbens sind vorrichtungstechnisch einfach vorzugweise parallel oder im Parallelabstand zueinander angeordnet.

Vorzugsweise sind der Ventilkörper, die Triebwelle und die Lagerachse im Parallelabstand zueinander in dem Gehäuse vorgesehen.

In weiterer Ausgestaltung der Erfindung ist der Ventilkörper mit seinem Stangenabschnitt in der Pumpenscheibe für die zweite Hydropumpe und/oder in der Zwischenscheibe über eine Schieberbohrung gleitend geführt.

Damit die Belastung des Kolbens auf den darin geführten Ventilkörper in Umfangsrichtung gering ist, ist der Kolben verdrehgesichert geführt. Hierfür kann ein Führungsbolzen vorgesehen sein, der sich ausgehend von der Zwischenscheibe erstreckt und in den Speicherraum einkragt. Der Bolzen taucht dabei in eine speicherraumseitige Sacklochbohrung des Kolbens des Hydrospeichers ein.

In weiterer Ausgestaltung der Erfindung stützt sich die erste Ventilfeder am Grund der Aussparung des Hydrospeichers ab. Für die zweite Ventilfeder ist vorrichtungstechnisch einfach ein Federteller vorgesehen, der am Kolben festgelegt ist und von dem Stangenabschnitt des Ventilkörpers durchsetzt ist. Der Federteller ist hierbei beispielsweise als Büchse mit einer bodenseitigen Durchgangsaussparung ausgebildet, die in einen Endabschnitt der Aussparung eingeschraubt ist. Die zweite Ventilfeder ist dann in einem vom Radialbund des Stangenabschnitts des Ventilkörpers und der Bodenseite der Büchse angeordnet. Die zweite Ventilfeder ist im Raum zwischen dem Radialbund und dem Grund der Aussparung des Kolbens angeordnet.

Die zweite Ventilfeder ist vorzugsweise derart ausgestaltet, dass sie erst ab einem bestimmten Kolbenhub des Kolbens ausgehend von seiner Grundstellung gespannt wird.

Zum Antreiben der Triebwelle über eine Antriebseinheit ist zwischen dieser und der Antriebseinheit eine Kupplungsvorrichtung vorgesehen. Bei der Kupplungseinrichtung handelt es sich vorzugsweise um eine Magnetkupplung. Hierdurch können die pumpenseitigen Triebteile der Kupplung vorrichtungstechnisch einfach abgedichtet werden.

Die Triebwelle ist vorzugsweise mit einem Magnetträger der Magnetkupplung verbunden, der von einem Magnettreiber umgriffen ist, wobei der Magnettreiber wiederum mit der Antriebseinheit in Verbindung steht. Zwischen dem Magnetträger und dem Magnettreiber kann einfach ein Dichttopf vorgesehen sein, der an das Gehäuse des Aggregats angeflanscht ist. Ein Triebwellenabschnitt mit dem Magnetträger kann somit vorzugsweise innerhalb des Dichttopfs angeordnet sein.

In weiterer Ausgestaltung der Erfindung ist die Kupplungsvorrichtung an das Gehäuse des Aggregats einfach angeflanscht. Vorzugsweise wird die Kupplungsvorrichtung hierbei an die Pumpenscheibe mit der ersten Hydropumpe angeflanscht.

Das Regelventil ist bevorzugter Weise im Strömungspfad zwischen dem Rückschlagventil und der Eingangsseite der zweiten Hydropumpe an diesen angeschlossen.

Das Rückschlagventil ist vorrichtungstechnisch einfach vorzugsweise als Ventilpatrone ausgebildet. Es kann einen Ventilkörper haben, der mit einer Federkraft über eine Ventilfeder in Richtung seiner Schließposition beaufschlagt ist.

Zur Sicherheit kann zusätzlich ein Druckbegrenzungsventil vorgesehen sein, mit dem der Systemdruck begrenzt ist. Dies ist beispielsweise einfach in der Zwischenscheibe ausgebildet. Mit Vorteil ist das Druckbegrenzungsventil als Ventilpatrone vorgesehen.

In weiterer Ausgestaltung der Erfindung sind die Kupplungsvorrichtung, die Pumpenscheiben, die Trennscheibe und die Zwischenscheibe gemeinsam vorrichtungstechnisch einfach über eine Mehrzahl von Bolzen verschraubt. Zum Anflanschen des Hydrospeichers können zusätzliche Bolzen vorgesehen sein.

Als Antriebseinheit ist vorzugsweise ein Elektromotor vorgesehen, der die Hydropumpe vorzugsweise mit einer konstanten Drehzahl antreibt.

Das gesamte Aggregat wird bevorzugterweise vorrichtungstechnisch einfach lediglich durch eine einzige Energiequelle, insbesondere in Form eines Elektromotors, betrieben.

Vorzugsweise sind die Materialien der Komponenten des Aggregats derart ausgewählt, dass sie eine weitreichende chemische Beständigkeit aufweisen.

Die Triebwelle und/oder die Lagerachsen sind vorzugsweise über Lagerbuchsen gelagert, was zu einer hohen Lebensdauer führt.

Durch die kompakte und robuste Ausgestaltung des Aggregats ist dieses über ihre Lebensdauer wartungsfrei betreibbar.

Erfindungsgemäß ist eine Anordnung mit einer doppelt wirkenden Gleitringdichtungsanordnung vorgesehen. Diese weist hierbei einen Sperrfluidraum auf. Das Aggregat gemäß einem der vorhergehenden Aspekte ist vorzugsweise mit seinem Eingangsanschluss und mit seinem Ausgangsanschluss mit dem Sperrfluidraum verbunden.

Eine Kombination einer Gleitringdichtungsanordnung mit einem derartigen Aggregat ist äußerst vorteilhaft, da die Gleitringdichtungsanordnung hierdurch kostengünstig und auf vorrichtungstechnisch einfache Weise mit einem im Wesentlichen konstanten Systemdruck versorgbar ist und zugleich eine ausreichende Umwälzung eines Sperrfluids ermöglicht ist.

Im Folgenden wird eine bevorzugte Ausführungsform der Erfindung anhand von Zeichnungen näher erläutert. Es zeigen:
Figur 1 ein hydraulisches Schaltbild einer erfindungsgemäßen Anordnung mit einem erfindungsgemäßen Aggregat und einer doppelt wirkenden Gleitringdichtungsanordnung,
Figur 2 in einer perspektivischen Darstellung das erfindungsgemäße Aggregat zusammen mit einer Antriebseinheit,
Figur 3 das erfindungsgemäße Aggregat in einem Längsschnitt,
Figur 4 in einem weiteren Längsschnitt das erfindungsgemäße Aggregat und
Figur 5 in einem weiteren Längsschnitt das Aggregat aus Figur 2.

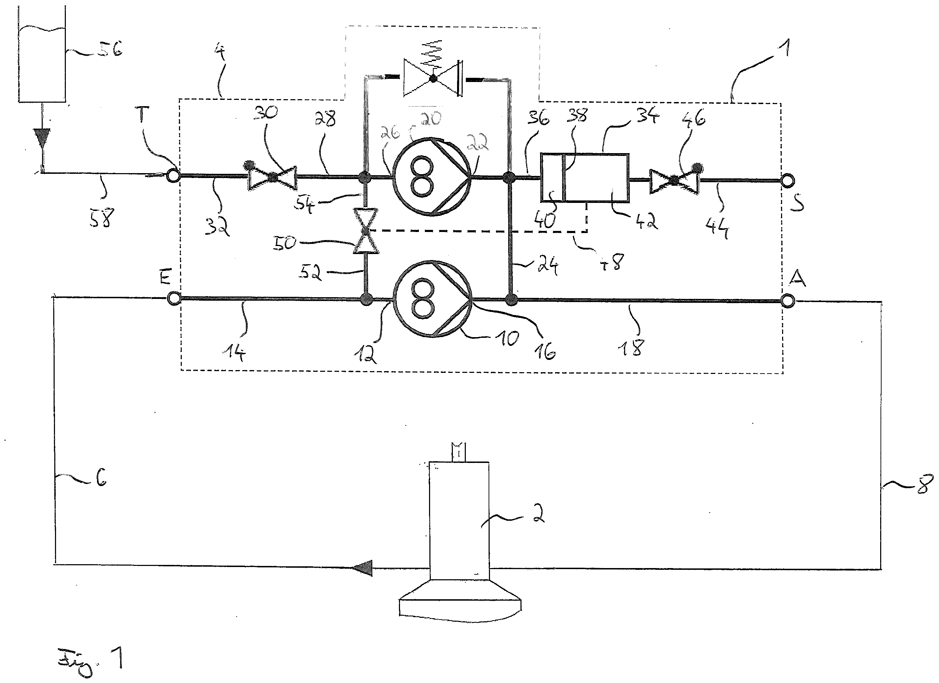

Gemäß Figur 1 ist ein Aggregat 1 für eine doppelt wirkende Gleitringdichtungsanordnung 2 dargestellt. Die Gleitringdichtungsanordnung 2 weist, wie eingangs im Stand der Technik erläutert, einen Sperrfluidraum mit einem Sperrfluid auf. Eine Druckbeaufschlagung und Umwälzung des Sperrfluids erfolgt hierbei über das Aggregat 1.

Das Aggregat 1 hat einen Eingangsanschluss E und einen Ausgangsanschluss A, die an einem Gehäuse 4 des Aggregats ausgebildet sind. Die Anschlüsse E und A sind mit dem Sperrfluidraum der Gleitringdichtungsanordnung 2 verbunden. Hierfür ist der Eingangsanschluss E an eine Ablaufleitung 6 und der Ausgangsanschluss A an eine Zulaufleitung 8 angeschlossen, die jeweils mit dem Sperrfluidraum fluidisch verbunden sind. Zur Zirkulation des Sperrfluids ist eine erste Hydropumpe 10 in Form einer Außenzahnradpumpe vorgesehen. Diese hat eine Eingangsseite 12 mit einem Eingangsanschluss, mit der die Verbindungsleitung 14 mit dem Eingangsanschluss E des Aggregats 1 verbunden ist. Auf ihrer Ausgangsseite 16 hat die Hydropumpe 10 einen Ausgangsanschluss, der über eine Pumpenleitung 18 mit dem Ausgangsanschluss A des Aggregats 1 verbunden ist. Im Betrieb fördert die Hydropumpe 10 Druckmittel von der Gleitringdichtungsanordnung über ihre Eingangsseite 12 zur Ausgangsseite 16 zurück zur Gleitringdichtungsanordnung 2.

Zusätzlich zur ersten Hydropumpe 10 ist eine zweite Hydropumpe 20 vorgesehen, die ebenfalls als Außenzahnradpumpe ausgebildet ist. Diese ist mit ihrer Ausgangsseite 22 mit einer Pumpenleitung 24 an die Pumpenleitung 18 angeschlossen und somit ebenfalls mit dem Ausgangsanschluss A verbunden. Mit ihrer Eingangsseite 26 ist die Hydropumpe 10 an eine Zuführleitung 28 angeschlossen. Diese wiederum ist über ein Rückschlagventil 30 mit einer Tankleitung 32 verbunden, die in einem Tankanschluss 34 des Gehäuses 4 mündet. Das Rückschlagventil 30 öffnet hierbei in einer Druckmittelströmungsrichtung vom Tankanschluss T hin zur zweiten Hydropumpe 20. Die zweite Hydropumpe 20 dient zum Aufbau eines Systemdrucks und zusätzlich zur Zirkulation des Sperrfluids, was unten stehend näher erläutert ist. An die Pumpenleitung 24 ist ein Hydrospeicher 34 über eine Speicherleitung 36 angeschlossen. Dieser ist als Kolbenspeicher mit einem Kolben 38 ausgebildet, der einen Speicherraum 40 von einem Gasraum 42 trennt. Der Speicherraum 40 ist somit neben den Hydropumpen 10 und 20 an den Ausgangsanschluss A des Aggregats 1 fluidisch angeschlossen. Der Gasraum 42 ist über eine Gasleitung 44 mit einem Speicheranschluss S verbunden. In der Gasleitung 44 ist ein Speicherventil 46 angeordnet. Über den Speicheranschluss S kann der Gasraum 42 mit Gas befüllt werden oder es kann aus diesem Gas entlassen werden. Über die Menge des Gases in dem Gasraum 42 ist der Systemdruck einstellbar. Bei dem Speicherventil 46 handelt es sich um ein Sperrventil, das zum Befüllen und Entlassen von Gas geöffnet ist und ansonsten den Gasraum 42 absperrt.

Der Hydrospeicher 34 ist über eine mechanische Kopplung 48 mit einem Regelventil 50 gekoppelt. Dieses ist über eine erste Zweigleitung 52 an die Verbindungsleitung 14 und somit im Strömungspfad zwischen dem Eingangsanschluss E und der Eingangsseite 12 der Hydropumpe 10 angeschlossen. Über eine zweite Zweigleitung 54 ist das Regelventil 50 an die Zuführleitung 28 und somit an den Strömungspfad zwischen dem Rückschlagventil 30 und der Eingangsseite 26 der Hydropumpe 20 angeschlossen. Mit dem Regelventil ist eine Druckmittelverbindung zwischen den Zweigleitungen 52 und 54 und somit zwischen den Eingangsseiten 12 und 26 der Hydropumpen 10 bzw. 20 auf- und zusteuerbar. Die Steuerung hängt hierbei vom Kolbenhub des Kolbens 38 des Hydrospeichers 34 ab. Je größer der Kolbenhub des Kolbens 38, d. h., je größer der vom Kolben 38 begrenzte Speicherraum 40 ist, desto größer ist auch der Systemdruck. Ab einem bestimmten Kolbenhub des Kolbens 38 öffnet das Regelventil 50, d. h., ab einem bestimmten Systemdruck sind die Eingangsseiten 12 und 26 der Hydropumpen 10 bzw. 20 fluidisch verbunden.

Zum Ausgleich einer Leckage ist ein Tank 56 vorgesehen, der über eine Tankleitung 58 an den Tankanschluss T des Aggregats 1 angeschlossen ist. Alternativ ist denkbar den Tank 56 in das Gehäuse 4 des Aggregats 1 zu integrieren oder diesen direkt an das Gehäuse 4 anzuschließen oder anzuflanschen.

Die Hydropumpen 10 und 20 werden vorzugsweise über eine gemeinsame Triebwelle von einer Antriebseinheit, beispielsweise einem Elektromotor, angetrieben.

Wird das Aggregat 1 gestartet und der Kolbenhub des Kolbens 38 ist unterhalb des vorbestimmten Kolbenhubs, bei dem das Regelventil 50 über die Kopplung 48 öffnet, so fördert die Hydropumpe 10 Sperrfluid vom Eingangsanschluss E zum Ausgangsanschluss A und die Hydropumpe 20 Sperrfluid vom Tank 56 zum Ausgangsanschluss A. Die Hydropumpe 10 wird somit unmittelbar bei Betriebsaufnahme des Aggregats 1 zur Zirkulation eingesetzt, während die Hydropumpe 20 Sperrfluid in das System einbringt. Die Förderung des Sperrfluids von der Hydropumpe 20 zu ihrer Ausgangsseite 22 führt dazu, dass der Kolben 38 in Richtung einer Vergrößerung des Speicherraums 40 verschoben wird und der Systemdruck durch Verkleinerung des Gasraums 42 steigt. Ist der gewünschte Kolbenhub des Kolbens 38 erreicht, so steuert das Regelventil 50 die Druckmittelverbindung zwischen den Eingangsseiten 12 und 26 der Hydropumpen 10 bzw. 20 auf. Die Hydropumpe 20 fördert nunmehr nicht mehr Sperrfluid vom Tank 56 sondern Sperrfluid vom Eingangsanschluss E zu ihrer Ausgangsseite 22. Es wird somit kein zusätzliches Sperrfluid in das System eingeführt. Die Hydropumpe 20 dient somit zusätzlich zur Hydropumpe 10 zur Zirkulation des Sperrfluids. Tritt Sperrfluid, beispielsweise aufgrund einer Leckage, aus dem System aus, so fällt der Systemdruck ab, womit der Kolben 38 in Richtung einer Verkleinerung des Speicherraums 40 verschoben wird. Durch die Kopplung 48 steuert das Regelventil 50 hierbei die Druckmittelverbindung zwischen den Eingangsseiten 12 und 26 der Hydropumpen 10 und 20 zu. Die Hydropumpe 20 fördert nun wieder Druckmittel vom Tank 56 zu ihrer Ausgangsseite 22, bis der gewünschte Kolbenhub des Kolbens 38 bzw. der gewünschte Systemdruck erreicht ist.

Sind die Hydropumpen 10 und 20 des Aggregats 1 nicht in Betrieb, so ist dennoch ein über den Hydrospeicher 34 vorgegebener Druck im System vorhanden.

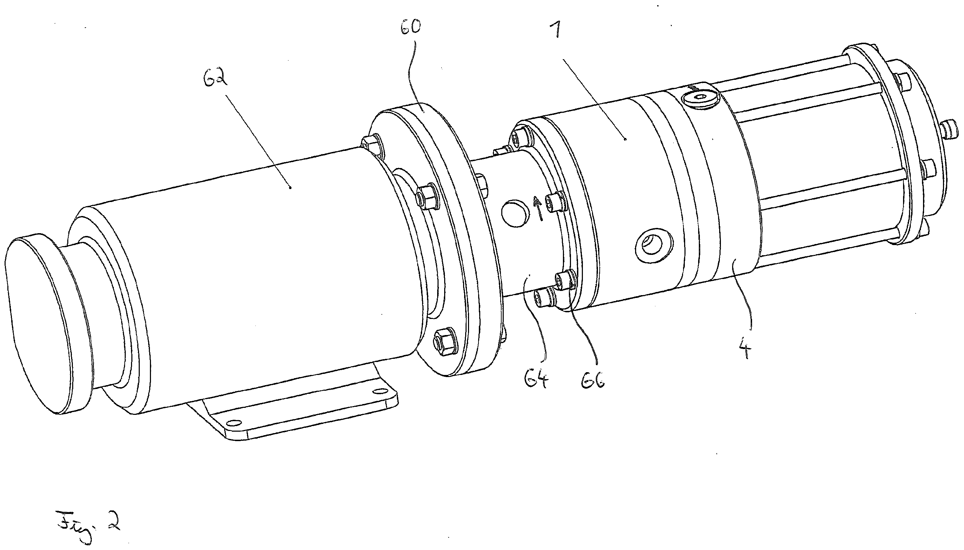

Gemäß Figur 2 ist das zylinderförmige Aggregat 1 dargestellt, an das über eine Flanschverbindung 60 eine Antriebseinheit 62 angeflanscht ist. Bei dieser handelt es sich um einen Elektromotor zum Antreiben der Hydropumpen 10 und 20 aus Figur 1. Die Flanschverbindung 60 ist Teil einer Kupplungsvorrichtung 64, die über eine Mehrzahl von Bolzen 66 mit dem Gehäuse 4 des Aggregats 1 verbunden ist.

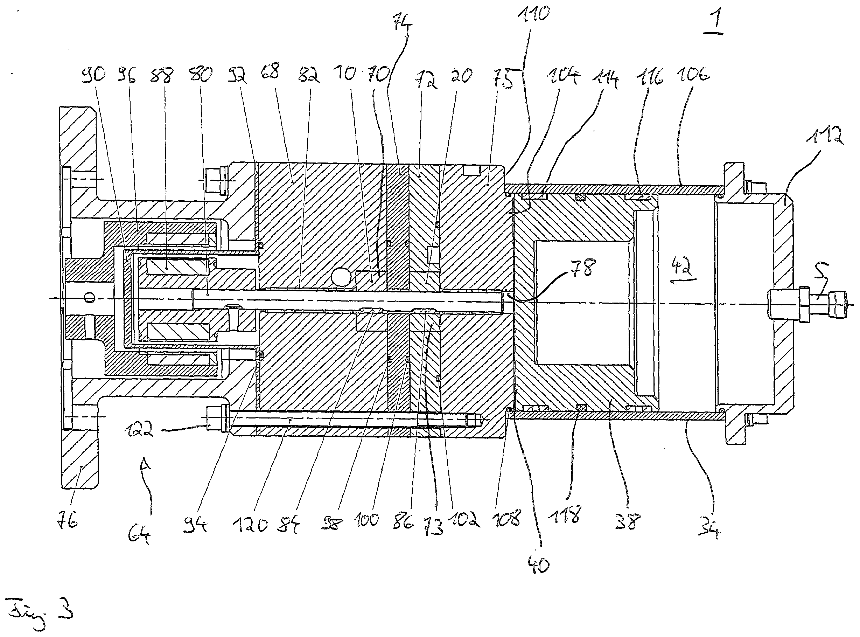

Der Aufbau des Aggregats 1 ist anhand Figur 3 ersichtlich. Dieses ist scheibenförmig ausgestaltet. Das Aggregat 1 hat eine Pumpenscheibe 68, in der die erste Hydropumpe 10 ausgebildet ist. Gemäß Figur 3 ist ein Zahnrad 70 der als Außenzahnradpumpe ausgebildeten Hydropumpe 10 dargestellt. Für die zweite Hydropumpe 20 ist eine zweite Pumpenscheibe 72 vorgesehen. Gemäß Figur 3 ist hierbei ein Zahnrad 73 der Hydropumpe 20 dargestellt, die ebenfalls als Außenzahnradpumpe ausgebildet ist. Die Pumpenscheiben 68 und 72 sind von einer Trennscheibe 74 voneinander getrennt. Auf der von der Trennscheibe 74 wegweisenden Seite der zweiten Pumpenscheibe 72 ist eine Zwischenscheibe 75 vorgesehen, an die der Hydrospeicher 34 angeschlossen. An die von der Trennscheibe 74 wegweisenden Scheibenseite der ersten Pumpenscheibe 68 ist ein Kupplungsgehäuse 76 der Kupplungsvorrichtung 64 angeschlossen.

Die Scheiben 68, 72, 74 und 76 weisen eine im Wesentlichen zylindrische Außenmantelfläche mit einem im Wesentlichen gleichen Durchmesser auf.

Die Scheiben 68, 72, 74 und 76 sind etwa koaxial zu ihrer Längsachse vollständig von einer Lagerbohrung 78 durchsetzt. In dieser ist eine Triebwelle 80 angeordnet, auf die die Zahnräder 70 und 73 gesetzt sind. Zum Lagern der Triebwelle 80 sind in die Lagerbohrung im Bereich der ersten Pumpenscheibe 68, der Trennscheibe 74 und der Zwischenscheibe 75 Lagerbuchsen 82 eingesetzt. Die Zahnräder 70 und 73 sind über eine Nut-Feder-Verbindung 84 bzw. 86 drehfest in Axialrichtung fixiert auf der Triebwelle 80 festgelegt.

Die Triebwelle 80 kragt mit einem Endabschnitt in einer Richtung weg von der Trennscheibe 74 in das Kupplungsgehäuse 76 ein. Der Endabschnitt ist hierbei mit einem Magnetträger 88 einer Magnetkupplung verbunden. Dieser ist von einem Dichttopf 90 umfasst, der endseitig einen äußeren Radialbund 92 aufweist. Über den Radialbund 92 ist der Dichttopf 90 zwischen der ersten Pumpenscheibe 68 und dem Kupplungsgehäuse 76 angeordnet. Um den Dichttopf 90 nach außen abzudichten, ist wiederum zwischen dem Radialbund 92 und der Pumpenscheibe 68 ein Dichtmittel 94 in Form eines O-Dichtrings oder eine Runddichtschnur abgedichtet. Der Dichttopf 90 ist von einem Magnettreiber 96 umgriffen, der somit auch den im Dichttopf 90 angeordneten Magnetträger 88 umgreift. Der innerhalb des Kupplungsgehäuses 76 angeordnete Magnettreibers 96 wiederum ist mit einer nicht dargestellten Triebwelle der Antriebseinheit 62 aus Figur 2 verbindbar. Um die Scheiben 68, 72, 74 und 75 nach Außen abzudichten, sind zwischen diesen Dichtmittel 98 bis 102 in Form von O-Dichtringen oder Runddichtschnüren angeordnet.

Die Zwischenscheibe 75 weist auf ihrer von der zweiten Pumpenscheibe 72 wegweisenden Seite einen Axialvorsprung 104 auf, auf den ein hohlzylindrischer Gehäusemantel 106 des Hydrospeichers 34 dichtend gesetzt ist. Zwischen dem Gehäusemantel 106 und dem Axialvorsprung 104 sind hierbei Dichtmittel 108 in Form eines O-Dichtrings oder einer Runddichtschnur eingebracht. Das Dichtmittel 108 umgreift hierbei den Axialvorsprung 104. Der Gehäusemantel 106 stützt sich mit seiner zur Zwischenscheibe 75 weisenden Stirnseite an einer durch den Axialvorsprung 104 gebildeten Ringfläche 110 der Zwischenscheibe 75 ab. Auf seiner von der Zwischenscheibe 75 wegweisenden Seite ist der Gehäusemantel 106 von einem Deckel 112 verschlossen. Innerhalb des Gehäusemantels 106 ist der Kolben 38 gleitend geführt. Hierfür sind von seiner Außenmantelfläche her zwei Ringnuten eingebracht, in die jeweils ein Gleitring 114 bzw. 116 eingesetzt ist, die als Führungseinrichtung dienen. In Axialrichtung gesehen zwischen den Gleitringen 114, 116 ist ein Dichtmittel 118 in Form eines O-Dichtrings oder einer Runddichtschnur vorgesehen. Der Kolben 38 trennt den Speicherraum 40 von dem Gasraum 42. Der Speicherraum 40 wird im Wesentlichen von einer Stirnfläche der Zwischenscheibe 75, von einer zur Zwischenscheibe 75 weisenden Kolbenfläche und von einer Innenmantelfläche des Gehäusemantels 106 begrenzt. Der Gasraum 72 wird von einer zur Zwischenscheibe 75 weisenden Seite des Deckels 112, von einer von der Zwischenscheibe 75 wegweisenden Kolbenfläche des Kolbens 38 und der Innenmantelfläche des Gehäuses 106 begrenzt. Zum Befüllen des Gasraums 42 mit Gas oder zum Entlassen von Gas aus dem Gasraum 42 ist am Deckel 112 der Speicheranschluss S vorgesehen.

Das Kupplungsgehäuse 76, der Dichttopf 90, die erste Pumpenscheibe 68, die Trennscheibe 74, die zweite Pumpenscheibe 72 und die Zwischenscheibe 75 sind vorrichtungstechnisch einfach gemeinsam über eine Mehrzahl von Gewindebolzen 120 miteinander verbunden. Für einen jeweiligen Gewindebolzen 120 sind die genannten Komponenten bis auf die Zwischenscheibe 75 mit Durchgangsbohrungen durchsetzt. Dagegen ist für einen jeweiligen Gewindebolzen 120 in die Zwischenscheibe 75 eine ein Gewinde aufweisende Sacklochbohrung eingebracht, mit der der Gewindebolzen 120 verschraubt ist. Ein jeweiliger Gewindebolzen 120 stützt sich über einen Kopf 122 am Kupplungsgehäuse 76 ab.

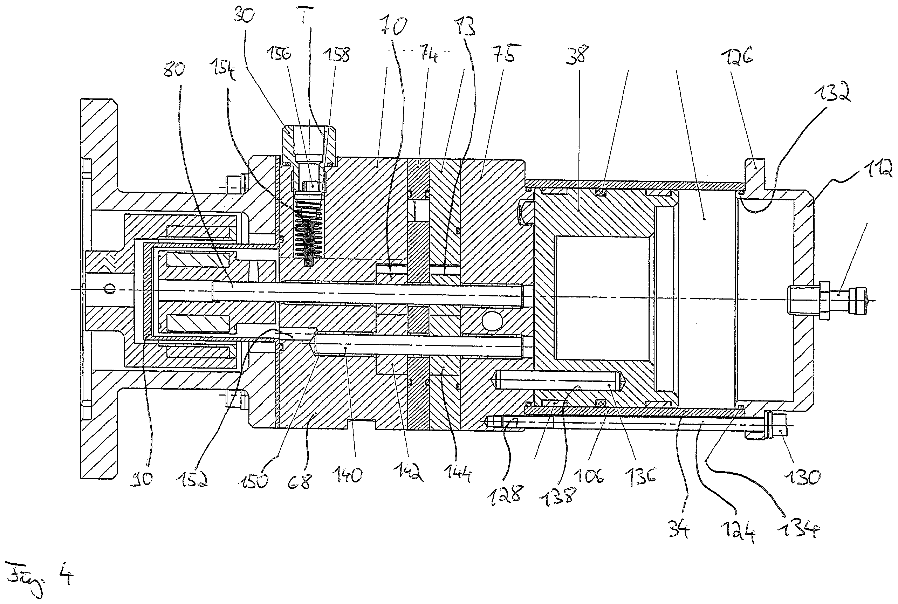

Gemäß Figur 4 ist der Hydrospeicher 34 über eine Mehrzahl von Gewindebolzen 124 mit der Zwischenscheibe 75 verschraubt. Hierfür ist am Deckel 112 ein Radialbund 126 vorgesehen, in den für die Gewindebolzen 124 Durchgangsbohrungen eingebracht sind. Die Gewindebolzen 124 erstrecken sich dann ausgehend vom Deckel 112 entlang des Gehäusemantels 106 zur Zwischenscheibe 75 und tauchen jeweils in eine Gewindebohrung 128 ein, die in der Zwischenscheibe 75 ausgebildet sind. Ein jeweiliger Gewindebolzen 124 stützt sich über einen Kopf 130 am Radialbund 126 ab. Der Deckel 112 ist mit einem Axialvorsprung 132 in den Gehäusemantel 106 eingesetzt und mit einem Dichtmittel 134 in Form eines O-Dichtrings oder einer Runddichtschnur abgedichtet.

Zur Verdrehsicherung des Kolbens 38 ist ein Bolzen 136 vorgesehen. Dieser ist in eine Bolzenaufnahme der Zwischenscheibe 75 fest eingesetzt und taucht in eine Führung 138 des Kolbens 38 ein. Der Bolzen 136 ist etwa im Parallelabstand zur Längsachse des Kolbens 38 angeordnet.

Gemäß Figur 4 ist im Parallelabstand zur Triebwelle 80 eine Lagerachse 140 vorgesehen. Auf dieser ist ein Zahnrad 142 der ersten Hydropumpe 10 aus Figur 3 und ein Zahnrad 144 der zweiten Hydropumpe 20 aus Figur 3 verdrehgesichert und in Axialrichtung fixiert festgelegt. Das Zahnrad 142 kämt hierbei mit dem Zahnrad 70 und das Zahnrad 144 mit dem Zahnrad 73. Zur Lagerung der Lagerachse 140 sind in der Zwischenscheibe 75 und der Trennscheibe 74 eine Durchgangsbohrung und in die erste Pumpenscheibe 68 eine Sacklochbohrung eingebracht. In den Bohrungen ist jeweils eine Lagerbuchse 150 vorgesehen, in denen die Lagerachse 140 gelagert ist. Die Sacklochbohrung der Pumpenscheibe 68 ist über eine Bohrung 152 mit einem Innenraum des Dichttopfs 90 verbunden.

Die Zahnräder 73 und 144 der zweiten Hydropumpe sind in Axialrichtung gesehen gleitend zwischen der Trennscheibe 74 und der Zwischenscheibe 75 gelagert. Die anderen Zahnräder 70, 142 der ersten Hydropumpe sind in Axialrichtung gesehen zum Einen gleitend in ihrer Pumpenscheibe 68 und zum Anderen an der Trennscheibe 74 gelagert. Radial von außen ist in die erste Pumpenscheibe 68 eine Ventilbohrung 154 eingebracht, in die das patronenartige Rückschlagventil 30 aus Figur 1 eingesetzt ist und zugleich den Tankanschluss T bildet. Das Rückschlagventil 30 hat einen Ventilkörper 156 dem ein Ventilsitz zugeordnet ist, und der in Schließrichtung von einer Ventilfeder 158 mit einer Federkraft in Schließrichtung beaufschlagt ist. Die Ventilfeder 158 stützt sich hierbei am Bohrungsgrund der Ventilbohrung 154 ab.

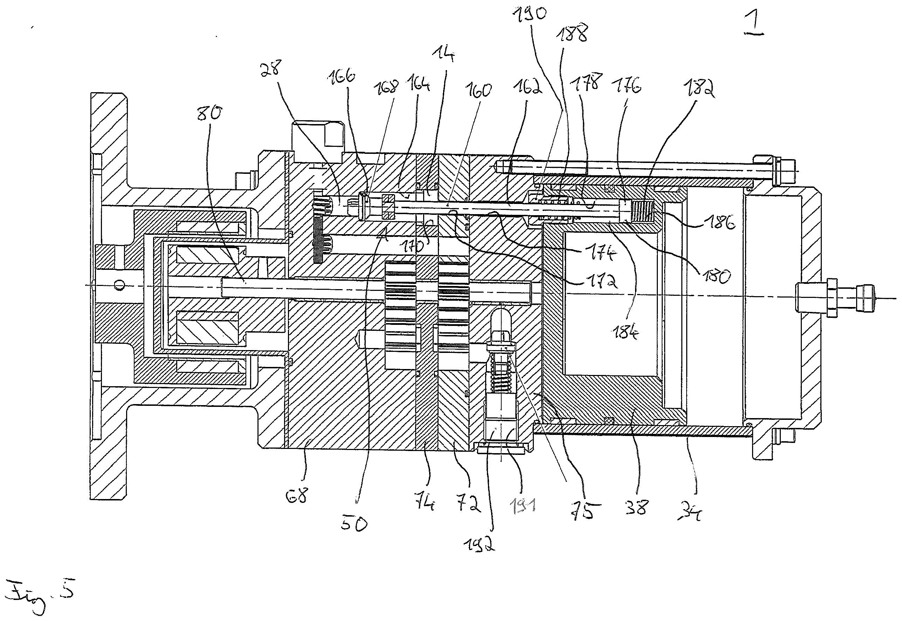

Gemäß Figur 5 ist das Aggregat 1 mit dem Regelventil 50 dargestellt. Dieses hat einen Ventilkörper 160 mit einem Stangenabschnitt 162. Der Ventilkörper 160 ist im Parallelabstand zur Triebwelle 80 in der ersten Pumpenscheibe 68, der Trennscheibe 74, der zweiten Pumpenscheibe 72 und der Zwischenscheibe 75 angeordnet. An der ersten Pumpenscheibe 68 ist für den Ventilkörper 160 ausgehend von der zur Trennscheibe 74 weisenden Seite her eine Stufenbohrung 164 eingebracht, die in der Zuführleitung 28, siehe auch Figur 1, mündet. Am Stufenübergang der Stufenbohrung 164 ist ein Ventilsitz 166 ausgebildet. Diesem ist ein zum Stangenabschnitt 162 verbreitertes Dichtelement 168 des Ventilkörpers 160 zugeordnet. Liegt das Dichtelement 168 am Ventilsitz 166 an, so sperrt es die Verbindung zwischen der Zuführleitung 28 und der Verbindungsleitung 14, siehe auch Figur 1, ab. An die Stufenbohrung 164 schließt sich etwa koaxial dazu eine Durchgangsbohrung 170 der Trennscheibe 74 an, die verbreitert zur Stufenbohrung 164 ausgebildet ist. An die Durchgangsbohrung 170 wiederum schließt sich eine Durchgangsbohrung 172 der zweiten Pumpenscheibe 72 und eine Durchgangsbohrung 174 der Zwischenscheibe 75 an. Deren Durchmesser ist kleiner als ein Durchmesser der Stufenbohrung 164. Sie dienen zur gleitenden Führung des Stangenabschnitts 162 und somit des Ventilkörpers 160. Der Stangenabschnitt 162 erstreckt sich ausgehend vom Dichtelement 168 in den Hydrospeicher 34 und taucht mit einem Endabschnitt 176 in eine sacklochförmige Aussparung 178 des Kolbens 38 in diesen ein. Der Endabschnitt 176 hat einen Radialbund 180, der in der Aussparung 178 einen ersten Federraum 182 von einem zweiten Federraum 184 trennt. In dem ersten Federraum 182 ist eine erste Ventilfeder 186 eingesetzt. Diese stützt sich am Grund der Aussparung 178 ab und beaufschlagt den Kolben 160 über seinen Radialbund 180 mit einer Federkraft in Schließrichtung. In dem zweiten Federraum 184 ist eine weitere Ventilfeder 188 angeordnet, die sich an einem in die Aussparung 178 eingeschraubten Federteller 190 abstützt und den Ventilkörper 160 in Öffnungsrichtung mit einer Federkraft beaufschlagen kann.

In der in der Figur 5 gezeigten Grundstellung des Kolbens 38, in der der Speicherraum 40 minimal ist, ist die zweite Ventilfeder 188 entspannt. Erst ab einem vorbestimmten Hub des Kolbens 38 liegt sie sowohl am Federteller 190 als auch am Radialbund 180 an. Dagegen ist die erste Ventilfeder 182 in der in Figur 5 gezeigten Stellung des Kolbens 38 (maximal) gespannt. Sie wird entsprechend entspannt, wenn sich der Kolben 38 in Richtung einer Vergrößerung des Speicherraums 40 aus Figur 1 verschiebt. Über die Federanordnung mit den Ventilfedern 186 und 188 ist der Ventilkörper 160 und somit das Regelventil 30 mechanisch mit dem Kolben 38 gekoppelt. Wie vorstehend unter Figur 1 erläutert, ist ein Kolbenhub des Kolbens 38 bzw. ein Volumen des Speicherraums 40 proportional zum Systemdruck. Ab einem bestimmten Kolbenhub 38 wird der Ventilkörper 160 dann durch die Federkraft der zweiten Ventilfeder 188 in eine Öffnungsstellung gebracht und die Eingangsseiten 12 und 26 der Hydropumpen 10 bzw. 20 aus Figur 1 verbunden. Sinkt der Systemdruck unter einen vorbestimmten Wert, so wird der Kolben 38 in Richtung einer Verkleinerung des Speicherraums 40 verschoben, womit ab einer bestimmten Federkraft der ersten Ventilfeder 186 der Ventilkörper 160 wieder zurück in seine Schließposition bewegt wird.

Gemäß Figur 5 ist in die Zwischenscheibe 75 radial eine Ventilbohrung 191 eingebracht, in die ein patronenartiges Druckbegrenzungsventil 192 eingesetzt ist. Dies dient zur Druckbegrenzung des Systemdrucks.

### Bezugszeichenliste:

- 1: Aggregat
- 2: Gleitringdichtungsanordnung
- 4: Gehäuse
- E: Eingangsanschluss
- A: Ausgangsanschluss
- T: Tankanschluss
- S: Speicheranschluss
- 6: Ablaufleitung
- 8: Zulaufleitung
- 10: Hydropumpe
- 12: Eingangseite
- 14: Verbindungsleitung
- 16: Ausgangsseite
- 18: Pumpenleitung
- 20: Hydropumpe
- 22: Ausgangsseite
- 24: Pumpenleitung
- 26: Eingangsseite
- 28: Zuführleitung
- 30: Rückschlagventil
- 32: Tankleitung
- 34: Hydrospeicher
- 36: Speicherleitung
- 38: Kolben
- 40: Speicherraum
- 42: Gasraum
- 44: Gasleitung
- 46: Speicherventil
- 48: Kopplung
- 50: Regelventil
- 52: Zweigleitung
- 54: Zweigleitung
- 56: Tank
- 58: Tankleitung
- 60: Flanschverbindung
- 62: Antriebseinheit
- 64: Kupplungsvorrichtung
- 66: Bolzen
- 68: erste Pumpenscheibe
- 70: Zahnrad
- 72: zweite Pumpenscheibe
- 73: Zahnrad
- 74: Trennscheibe
- 75: Zwischenscheibe
- 76: Kupplungsgehäuse
- 78: Lagerbohrung
- 80: Triebwelle
- 82: Lagerbuchse
- 84: Nut-Feder-Verbindung
- 86: Nut-Feder-Verbindung
- 88: Magnetträger
- 90: Dichttopf
- 92: Radialbund
- 94: Dichtmittel
- 96: Magnettreiber
- 98: Dichtmittel
- 100: Dichtmittel
- 102: Dichtmittel
- 104: Axialvorsprung
- 106: Gehäusemantel
- 108: Dichtmittel
- 110: Ringfläche
- 112: Deckel
- 114: Gleitring
- 116: Gleitring
- 118: Dichtmittel
- 120: Gewindebolzen
- 122: Kopf
- 124: Gewindebolzen
- 126: Radialbund
- 128: Gewindebohrung
- 130: Kopf
- 132: Axialvorsprung
- 134: Dichtmittel
- 136: Bolzen
- 138: Führung
- 140: Lagerachse
- 142: Zahnrad
- 144: Zahnrad
- 150: Lagerbuchse
- 152: Kanal
- 154: Ventilbohrung
- 156: Ventilkörper
- 158: Ventilfeder
- 160: Ventilkörper
- 162: Stangenabschnitt
- 164: Stufenbohrung
- 166: Ventilsitz
- 168: Dichtelement
- 170: Durchgangsbohrung
- 172: Durchgangsbohrung
- 174: Durchgangsbohrung
- 176: Endabschnitt
- 178: Aussparung
- 180: Radialbund
- 182: Federraum
- 184: Federraum
- 186: Ventilfeder
- 188: Ventilfeder
- 190: Federteller
- 191: Ventilbohrung
- 192: Druckbegrenzungsventil

## Patentansprüche

1. Aggregat zur Umwälzung eines Druckmittels in einem Druckmittelraum, wobei das Aggregat einen Ausgangsanschluss (A) und einen Eingangsanschluss (E) aufweist, die fluidisch mit dem Druckmittelraum verbindbar sind, und mit einem Tankanschluss (T), wobei eine erste Hydropumpe (10) vorgesehen ist, die eingangsseitig mit dem Eingangsanschluss (E) und ausgangsseitig mit dem Ausgangsanschluss (A) verbunden ist, und wobei eine zweite Hydropumpe (20) vorgesehen ist, die eingangsseitig mit dem Tankanschluss (T) und ausgangsseitig mit dem Ausgangsanschluss (A) verbunden ist, wobei über eine Einrichtung (30) Druckmittel vom Tankanschluss (T) zur Eingangsseite (26) der zweiten Hydropumpe (20) strömbar ist und ein Strömen des Druckmittels in entgegengesetzter Richtung gesperrt ist, und wobei ein vorspannbarer Hydrospeicher (34) fluidisch mit dem Ausgangsanschluss (A) verbunden ist, **dadurch gekennzeichnet, dass** ein Regelventil (50) vorgesehen ist, das mechanisch derart mit dem Hydrospeicher (34) in Wirkverbindung steht, dass es in Abhängigkeit eines Ladevolumens (40) des Hydrospeichers (34) eine fluidische Verbindung zwischen Eingangsseiten (12, 26) der Hydropumpen (10, 20) regelt.

2. Aggregat nach Anspruch 1, wobei ein Ventilkörper (160) des Regelventils (50) mechanisch mit einem Trennelement (38) des Hydrospeichers (34) verbunden ist und in Abhängigkeit einer Position des Trennelements (38) die fluidische Verbindung zwischen den Eingangsseiten (12, 26) der Hydropumpen (10, 20) regelt.

3. Aggregat nach Anspruch 2, wobei der Hydrospeicher (34) als ein Kolbenspeicher mit einem Kolben (38) als Trennelement ausgebildet ist, der einen mit dem Ausgangsanschluss (A) verbundenen Speicherraum (40) von einem Gasraum (42) trennt, wobei zum Einstellen eines ausgangsseitig der Hydropumpen (10, 20) vorgesehenen Systemdrucks Gas in den Gasraum (42) zuführbar und abführbar ist.

4. Aggregat nach Anspruch 2 oder 3, wobei das Regelventil (50) ab einem bestimmten Hub des Trennelements (38) die fluidische Verbindung zwischen den Eingangsseiten (12, 26) der Hydropumpen (10, 20) aufsteuert.

5. Aggregat nach einem der vorhergehenden Ansprüche, wobei dieses ein scheibenartig modular ausgestaltetes Gehäuse (4) aufweist.

6. Aggregat nach Anspruch 5, wobei die Hydropumpen Außenzahnradpumpen (10, 20) sind, die jeweils in einer jeweiligen Pumpenscheibe (68, 72) des Gehäuses (4) angeordnet sind und räumlich über eine Trennscheibe (74) voneinander getrennt sind.

7. Aggregat nach Anspruch 6, wobei an eine der Pumpenscheiben (72) der Hydrospeicher (34) auf der von dem Trennelement (74) wegweisenden Scheibenseite angeordnet ist.

8. Aggregat nach Anspruch 7, wobei der Hydrospeicher (34) über eine Zwischenscheibe (75) an die Pumpenscheibe (72) angeordnet ist.

9. Aggregat nach einem der Ansprüche 2 bis 9, wobei der Ventilkörper (160) des Regelventils (50) in einer Grundstellung die fluidische Verbindung zwischen den Eingangsseiten (12, 26) der Hydropumpen (10, 20) sperrt und in einer Schaltstellung die fluidische Verbindung zwischen den Eingangsseiten (12, 26) der Hydropumpen (10, 20) freigibt.

10. Aggregat nach Anspruch 9, wobei der Ventilkörper (160) des Regelventils (50) in Richtung seiner Grundstellung von einer Federkraft einer am Kolben (38) abstützbaren ersten Ventilfeder (186) und entgegengesetzt in Richtung der Schaltstellung von einer Federkraft einer am Kolben (38) abstützbaren zweiten Ventilfeder (188) beaufschlagbar ist, wobei die Federkräfte abhängig vom Kolbenhub des Kolbens sind.

11. Aggregat nach Anspruch 10, wobei der Ventilkörper (160) des Regelventils (50) einen in etwa parallel zur Längsachse des Kolbens (38) sich erstreckenden Stangenabschnitt (162) hat, der mit einem Radialbund (176) in eine hin zum Speicherraum (40) geöffnete Aussparung (178) des Kolbens (38) eintaucht, wobei der Ventilkörper (160) über den Radialbund (176) mit den Federkräften beaufschlagbar ist.

12. Aggregat nach einem der Ansprüche 3 bis 11, wobei der Kolben (38) verdrehgesichert ist.

13. Aggregat nach einem der Ansprüche 6 bis 12, wobei an eine der Pumpenscheiben (68) eine Kupplungsvorrichtung (64) für eine Antriebseinheit (62) der Hydropumpen (10, 20) auf der von dem Trennelement (74) wegweisenden Scheibenseite angeordnet ist.

14. Aggregat nach Anspruch 13, wobei zumindest zwei der Scheiben (68, 74, 72, 75) über Bolzen fest miteinander verbunden sind.

15. Anordnung mit einer doppelt wirkenden Gleitringdichtungsanordnung (2), die einen Sperrfluidraum aufweist, wobei das Aggregat (1) gemäß einem der vorhergehenden Ansprüche vorgesehen ist, das mit seinem Eingangsanschluss (E) und mit seinem Ausgangsanschluss (A) mit dem Sperrfluidraum verbunden ist.

## Claims

1. Assembly for circulation of a pressurizing medium in a pressurizing-medium space, wherein the assembly comprises an output terminal (A) and an input terminal (E) which are fluidically connectable to the pressurizing-medium space, and with a tank connection (T), wherein a first hydraulic pump (10) is provided, which is connected to the input terminal (E) on the input side and to the output terminal (A) on the output side, and wherein a second hydraulic pump (20) is provided, which is connected to the tank connection to (T) on the input side and to the output terminal (A) on the output side, wherein pressurizing medium can flow from the tank connection (T) to the input side (26) of the second hydraulic pump (20) via a device (30) and flow of the pressurizing medium is sealed in the opposite direction, and wherein a preloadable hydraulic accumulator (34) is fluidically connected to the output terminal (A), **characterized in that** a control valve (50) is provided which is mechanically in operative connection with the hydraulic accumulator (34) in such a way that the control valve (50) controls a fluidic connection between input sides (12, 26) of the hydraulic pumps (10, 20) in dependence on a load volume (40) of the hydraulic accumulator (34).

2. The assembly according to claim 1, wherein a valve body (160) of the control valve (50) is mechanically connected to a separating element (38) of the hydraulic accumulator (34) and controls the fluidic connection between the input sides (12, 26) of the hydraulic pumps (10, 20) in dependence on a position of the separating element (38).

3. The assembly according to claim 2, wherein the hydraulic accumulator (34) is formed as a piston accumulator with a piston (38) as separating element, which separates an accumulator space (40) connected to the output terminal (A) from a gas chamber (42), wherein gas can be fed into and discharged from the gas space (42) for adjusting a system pressure provided on an output side of the hydraulic pumps (10, 20).

4. The assembly according to claim 2 or 3, wherein the control valve (50) opens the fluidic connection between the input sides (12, 26) of the hydraulic pumps (10, 20) after reaching a certain stroke of the separating element (38).

5. The assembly according to one of the preceding claims, wherein the assembly comprises a disk-like housing (4) having a modular form.

6. The assembly according to claim 5, wherein the hydraulic pumps are external gear pumps (10, 20) which are each disposed in a respective pump disc (68, 72) of the housing (4) and which are spatially separated from each other via a separating disc (74).

7. The assembly according to claim 6, wherein the hydraulic accumulator (34) is arranged on one of the pump discs (72) on the side of the disc facing away from the separating element (74).

8. The assembly according to claim 7, wherein the hydraulic accumulator (34) is arranged on the pump disc (72) via an intermediate disc (75).

9. The assembly according to one of claims 2 to 9, wherein the valve body (160) of the control valve (50) in a basic position seals the fluidic connection between the input sides (12, 26) of the hydraulic pumps (10, 20) and in a switching position, it releases the fluidic connection between the input sides (12, 26) of the hydraulic pumps (10, 20).

10. The assembly according to claim 9, wherein a spring force of a first valve spring (186) supportable on the piston (38) can act upon the valve body (160) of the control valve (50) in the direction of its basic position and a spring force of a second valve spring (188) supportable on the piston (38) can act upon the valve body (160) of the control valve (50) reversely in the direction of the switching position, wherein the spring forces are dependent on the piston stroke of the piston.

11. The assembly according to claim 10, wherein the valve body (160) of the control valve (50) comprises a rod portion (162) extending approximately in parallel to the longitudinal axis of the piston (38) which is inserted with a radial collar (176) into a recess (178) of the piston (38) opened toward the storage space (40), wherein the spring forces can be applied to the valve body (160) via the radial collar (176).

12. The assembly according to one of claims 3 to 11, wherein the piston (38) is secured against rotation.

13. The assembly according to one of claims 6 to 12, wherein a coupling device (64) for a drive unit (62) of the hydraulic pumps (10, 20) is arranged on one of the pumps discs (68) on the disc side facing away from the separating element (74).

14. The assembly according to claim 13, wherein at least two of the discs (68, 74, 72, 75) are fixedly connected to each other via bolts.

15. An arrangement with a double-acting slide ring seal arrangement (2) which has a sealing-fluid space, wherein the assembly (1) is provided according to one of the preceding claims and wherein it is connected to the sealing-fluid space with its input terminal (E) and with its output terminal (A).

## Revendications

1. Groupe destiné à mettre en circulation un fluide de pression dans une chambre de fluide de pression, le groupe comprenant un raccord de sortie (A) et un raccord d'entrée (E), qui peuvent être reliés sur le plan fluidique, à la chambre de fluide de pression, et comprenant un raccord de réservoir (T), groupe dans lequel il est prévu une première pompe hydraulique (10), qui est reliée, côté entrée, au raccord d'entrée (E), et, côté sortie, au raccord de sortie (A), et dans lequel il est prévu une deuxième pompe hydraulique (20), qui est reliée, côté entrée, au raccord de réservoir (T), et côté sortie, au raccord de sortie (A), dans lequel, par l'intermédiaire d'un dispositif (30), du fluide de pression peut s'écouler du raccord de réservoir (T) au côté entrée (26) de la deuxième pompe hydraulique (20), et un écoulement du fluide de pression est bloqué dans le sens opposé,
et dans lequel un accumulateur hydraulique (34) pouvant être mis en pression préalable, est relié sur le plan fluidique, au raccord de sortie (A),
**caractérisé en ce qu'**il est prévu une soupape de régulation (50), qui est mécaniquement en interaction avec l'accumulateur hydraulique (34) de façon à réguler une liaison fluidique entre des côtés entrée (12, 26) des pompes hydrauliques (10, 20), en fonction d'un volume de charge (40) de l'accumulateur hydraulique (34).

2. Groupe selon la revendication 1, dans lequel un corps d'obturation de soupape (160) de la soupape de régulation (50) est relié mécaniquement à un élément de séparation (38) de l'accumulateur hydraulique (34), et régule la liaison fluidique entre les côtés entrée (12, 26) des pompes hydrauliques (10, 20), en fonction d'une position de l'élément de séparation (38).

3. Groupe selon la revendication 2, dans lequel l'accumulateur hydraulique (34) est réalisé sous la forme d'un accumulateur à piston avec un piston (38) en guise d'élément de séparation, qui sépare une chambre d'accumulateur (40) reliée au raccord de sortie (A), d'une chambre de gaz (42), du gaz pouvant être amené dans la chambre de gaz (42) et en être évacué pour régler une pression de système prévue du côté sortie des pompes hydrauliques (10, 20).

4. Groupe selon la revendication 2 ou la revendication 3, dans lequel la soupape de régulation (50) commande, à partir d'une course déterminée de l'élément de séparation (38), l'ouverture de la liaison fluidique entre les côtés entrée (12, 26) des pompes hydrauliques (10, 20).

5. Groupe selon l'une des revendications précédentes, dans lequel celui-ci présente un carter (4) de configuration modulaire, à disques.

6. Groupe selon la revendication 5, dans lequel les pompes hydrauliques sont des pompes à engrenages extérieurs (10, 20), qui sont agencées chacune dans un disque de pompe respectif (68, 72) du carter (4), et séparées spatialement l'une de l'autre par l'intermédiaire d'un disque de séparation (74).

7. Groupe selon la revendication 6, dans lequel sur l'un des disques de pompe (72), est agencé l'accumulateur hydraulique (34), sur le côté du disque opposé à celui dirigé vers le disque de séparation (74).

8. Groupe selon la revendication 7, dans lequel l'accumulateur hydraulique (34) est agencé sur le disque de pompe (72) par l'intermédiaire d'un disque intermédiaire (75).

9. Groupe selon l'une des revendications 2 à 9, dans lequel le corps d'obturation de soupape (160) de la soupape de régulation (50), dans une position de base, bloque la liaison fluidique entre les côtés entrée (12, 26) des pompes hydrauliques (10, 20), et, dans une position de commutation, libère la liaison fluidique entre les côtés entrée (12, 26) des pompes hydrauliques (10, 20).

10. Groupe selon la revendication 9, dans lequel le corps d'obturation de soupape (160) de la soupape de régulation (50) est sollicité en direction de sa position de base par la force de ressort d'un premier ressort de soupape (186) pouvant prendre appui sur le piston (38), et à l'opposé en direction de la position de commutation, par la force de ressort d'un deuxième ressort de soupape (188) pouvant prendre appui sur le piston (38), les forces de ressort étant fonction de la course de déplacement de piston du piston.

11. Groupe selon la revendication 10, dans lequel le corps d'obturation de soupape (160) de la soupape de régulation (50), comporte un tronçon de tige (162), qui s'étend environ parallèlement à l'axe longitudinal du piston (38) et qui, avec une collerette radiale (176), s'engage dans un évidement (178) du piston (38), ouvert vers la chambre d'accumulateur (40), le corps d'obturation de soupape (160) pouvant être sollicité par les forces de ressort, par l'intermédiaire de la collerette radiale (176).

12. Groupe selon l'une des revendications 3 à 11, dans lequel le piston (38) est arrêté en rotation.

13. Groupe selon l'une des revendications 6 à 12, dans lequel sur l'un des disques de pompe (68) est agencé un dispositif d'accouplement (64) pour une unité d'entraînement (62) des pompes hydrauliques (10, 20), sur le côté de disque opposé à celui dirigé vers le disque de séparation (74).

14. Groupe selon la revendication 13, dans lequel au moins deux des disques (68, 74, 72, 75) sont reliés de manière fixe les uns aux autres par l'intermédiaire de boulons.

15. Agencement comprenant un agencement d'étanchéité à anneaux glissants (2) à double effet, qui présente une chambre de fluide de barrage, agencement dans lequel il est prévu le groupe (1) selon l'une des revendications précédentes, qui est relié avec son raccord d'entrée (E) et son raccord de sortie (A), à la chambre de fluide de barrage.
